Europäisches Patentamt

European Patent Office

Office européen des brevets

(11) Veröffentlichungsnummer: **0 086 940**

**A1**

(12) # EUROPÄISCHE PATENTANMELDUNG

(21) Anmeldenummer: **83100257.1**

(22) Anmeldetag: **14.01.83**

(51) Int. Cl.³: **B 65 G 51/32**

(30) Priorität: **02.02.82 DE 3203333**

(43) Veröffentlichungstag der Anmeldung:
**31.08.83 Patentblatt 83/35**

(84) Benannte Vertragsstaaten:
**AT BE CH FR GB IT LI LU NL SE**

(71) Anmelder: **Aerocontact GmbH & Co. KG**
**Plochinger Strasse 54**
**D-7301 Deizisau(DE)**

(72) Erfinder: **Blessing, Albert**
**Schurwaldstrasse 21**
**D-7302 Ostfildern(DE)**

(74) Vertreter: **Rüger, Rudolf, Dr.-Ing.**
**Webergasse 3 Postfach 348**
**D-7300 Esslingen/Neckar(DE)**

(54) **Speicherfähige Rohrpoststation.**

(57) Eine für den Durchlauf, den Empfang und das Absenden von Rohrpostbüchsen (22) eingerichtete speicherfähige Rohrpoststation (2) enthält ein Gehäuse (7) und ein aus dem Zug eines durchgehenen Fahrrohres herausschwenkbares und in dem Gehäuse (7) befindliches Rohrstück (10), das an einem Ende beweglich an das Fahrrohr angeschlossen und in seiner Ruhestellung beidends abgedichtet mit dem Fahrrohr verbunden ist und durch das in der ausgeschwenkten Stellung eine ankommende Rohrpostbüchse (22) zu einer Auffangstelle leitbar ist. In dem Gehäuse (7) ist ferner eine Leitvorrichtung (24) vorgesehen, mit der eine in der Rohrpoststation (2) gespeicherte Rohrpostbüchse (22) in das Fahrrohr überführbar ist, wenn das Rohrstück (10) aus seiner Ruhelage herausgeschwenkt ist.

Um eine Doppelbelegung der Rohrpoststation (2) mit Rohrpostbüchsen (22) zu vermeiden und um zu verhindern, daß gleichzeitig mehr als eine Rohrpostbüchse (22) in die Rohrpostanlage eingespeist wird, ist der Eingabeöffnung eine Sperreinrichtung für Rohrpostbüchsen (22) zugeordnet, durch die sowohl bei einer in der Leitvorrichtung (24) eingelegten und dort gespeicherten Rohrpostbüchse (22) als auch bei aus der Ruhelage herausgeschwenkter Leitvorrichtung (24) die Eingabe von Rohrpostbüchsen (22) in die Eingabeöffnung gesperrt ist. Die Leitvorrichtung (24) ist so gestaltet, daß in ihr Rohrpostbüchsen (22) zwischengespeichert werden können.

./...

*Fig. 2*

- 1 -

## Speicherfähige Rohrpoststation

Die Erfindung geht aus von einer für Durchlauf, Empfang und Absendung von Rohrpostbüchsen eingerichteten speicherfähigen Rohrpoststationen mit einem eine Vorderwand, eine Sperreinrichtung für Rohrpostbüchsen und eine Eingabeöffnung für Rohrpostbüchsen aufweisenden Gehäuse, einem aus dem Zuge eines durchgehenden Fahrrohres herausschwenkbaren und in dem Gehäuse befindlichen Rohrstück, das an einem Ende beweglich an das Fahrrohr angeschlossen und in seiner Ruhestellung beidends abgedichtet mit dem Fahrrohr verbunden ist und durch das in der ausgeschwenkten Stellung eine ankommende Rohrpostbüchse zu einer Auffangstelle leitbar ist, sowie mit einem in dem Bereich des anderen mit dem Rohrstück wahlweise in Verbindung bringbaren freien Endes des Fahrrohres angeordneten Verschlußstück, durch das das Fahrrohr wahlweise verschließbar ist, und mit einer in dem Gehäuse angelenkten und der Einleitung einer abzusendenden Rohrpostbüchse dienenden Leitvorrichtung, die bei herausgeschwenktem Rohrstück zum Einführen der Rohrpostbüchse in das Fahrrohr aus ihrer Ruhestellung über die Öffnung des freien Endes des Fahrrohres bringbar ist.

Bei einer derartigen aus der Praxis bekannten Rohrpoststation besteht die Eingabeöffnung aus einem an der Oberseite des Gehäuses neben dem Fahrrohr befestigten Speicherrohrstutzen, in den die abzusendende Rohrpostbüchse eingeführt werden muß und der an seinem Ende eine Sperre aufweist, die verhindert, daß die in den Speicherrohrstutzen eingeführte Rohrpostbüchse in die Leitvorrichtung gelangt.

Zum Absenden der in den Speicherrohrstutzen eingeführten Rohrpostbüchse wird die Leitvorrichtung über das
freie Ende des Fahrrohres geschwenkt und die Sperre an
dem Speicherrohrstutzen gelöst, so daß die Rohrpostbüchse in das Fahrrohr gleiten kann. Da jedoch die Sperre eine bestimmte Zeit geöffnet bleiben muß, um ein zuverlässiges Durchgleiten der Rohrpostbüchse sicherzustellen, ist es nicht ausgeschlossen, daß versehentlich noch eine zweite Rohrpostbüchse in den Speicherrohrstutzen eingegeben werden kann, die dann unmittelbar an das Fahrrohr gelangt, so daß in der Rohrpostanlage gleichzeitig zwei Rohrpostbüchsen unterwegs sind,
was zu erheblichen Betriebsstörungen führen kann.

Außerdem erfordert die an dem Speicherrohrstutzen vorgesehene Sperre eine zusätzliche Steuerung und Betätigung, was die Herstellungs- und Installationskosten
sowie den Steueraufwand nicht unerheblich erhöht.

Wegen der von oben erfolgenden Eingabe der Rohrpostbüchse kann die Rohrpoststation schließlich auch nicht
in die Wand eingebaut werden.

Ausgehend von diesem Stand der Technik ist es Aufgabe
der Erfindung, eine speicherfähige Rohrpoststation zu
schaffen, bei der auf einfache Weise und ohne zusätzliche Steuerungen sichergestellt ist, daß jeweils nur
eine einzige Rohrpostbüchse in die Leitvorrichtung gelangen und beim Absendevorgang in das Fahrrohr eingeführt werden kann.

Zur Lösung dieser Aufgabe ist die erfindungsgemäße Rohrpoststation dadurch gekennzeichnet, daß der Eingabeöffnung die Sperreinrichtung für Rohrpostbüchsen zugeordnet ist, durch die sowohl bei einer in die Leitvorrichtung eingelegten und dort gespeicherten Rohrpostbüchse als auch bei aus der Ruhestellung verschwenkter Leitvorrichtung die Eingabe von Rohrpostbüchsen in die Eingabeöffnung gesperrt ist.

Durch die Ausbildung der Leitvorrichtung zum Speichern von Rohrpostbüchsen ergibt sich der Vorteil, daß die abzusendende Rohrpostbüchse vollständig in dem Gehäuse der Rohrpoststation untergebracht ist und nicht etwa in störender Weise über deren Außenberandung heraussteht. Auch treten bei dieser Anordnung keine Steuerungsprobleme bei der Übergabe der Rohrpostbüchse aus dem Speicherraum in die Leitvorrichtung auf, weil die Leitvorrichtung gleichzeitig als Speicher für die Rohrpostbüchse dient.

Eine sehr einfache Sperreinrichtung, die hinsichtlich der räumlichen Anordnung der einzelnen Bauteile innerhalb des Gehäuses der Rohrpoststation relativ große Freiheiten läßt, besteht darin, daß die Sperreinrichtung ein mit der Bewegung der Leitvorrichtung zwangsweise gekuppeltes und innerhalb des Gehäuses vor der Eingabeöffnung verschwenkbares Sperrglied umfaßt, durch das die Eingabeöffnung bei aus der Ruhelage verschwenkter Leitvorrichtung wenigstens teilweise verschlossen ist.

Ein Einbau der Rohrpoststation in eine Wand eines Gebäudes od.dgl. ist möglich, wenn die Eingabeöffnung in der Vorderwand des Gehäuses im Bereich der in der Ruhestellung befindlichen Leitvorrichtung angeordnet ist und die Sperreinrichtung die Leitvorrichtung beinhaltet, durch die im aus der Ruhelage herausgeschwenkten Zustand

- 4 -

die Eingabeöffnung wenigstens teilweise verschlossen ist.

Eine sehr einfache konstruktive Lösung für das Verschließen der Eingabeöffnung bei in der Leitvorrichtung enthaltener Rohrpostbüchse besteht darin, daß die Sperreinrichtung die Eingabeöffnung enthält, die solche Abmessungen und eine solche Lage innerhalb der Vorderwand aufweist, daß sie durch eine einzige in der in der Ruhestellung befindlichen Leitvorrichtung enthaltenen Rohrpostbüchse für die Eingabe einer weiteren Rohrpostbüchse gesperrt ist.

Um sicherzustellen, daß bei auf Empfang geschalteter Rohrpoststation, bei der die Leitvorrichtung in der Bewegung mit dem Rohrstück gekuppelt ist, eine in der Leitvorrichtung gespeicherte Rohrpostbüchse nicht selbsttätig in das Fahrrohr gelangt, kann die Leitvorrichtung ein wahlweise betätigbares Halteglied für eine eingesetzte Rohrpostbüchse aufweisen. Auch ist es möglich, das Verschlußstück an dem freien Ende des Fahrrohres so zu gestalten, daß die Leitvorrichtung mit eingelegter Rohrpostbüchse aus der Ruhelage heraus über das Fahrrohr und zurück verschwenkbar ist.

In der Zeichnung ist ein Ausführungsbeispiel des Gegenstandes der Erfindung dargestellt. Es zeigen:

Fig. 1    eine Rohrpostanlage mit Rohrpoststationen gemäß der Erfindung in einer schematischen Darstellung,

Fig. 2    eine Rohrpoststation gemäß der Erfindung in perspektivischer Darstellung bei geöffnetem Gehäuse unter Veranschaulichung des Durchlaufbetriebs,

- 5 -

Fig. 3 die Rohrpoststation nach Fig. 2 in perspektivischer Darstellung mit eingelegter, in der Eingabeöffnung sichtbarer Rohrpostbüchse,

Fig. 4 die Rohrpoststation nach Fig. 2 in perspektivischer Darstellung bei geöffnetem Gehäuse unter Veranschaulichung des Absendens einer in der Leitvorrichtung eingelegten Rohrpostbüchse und

Fig. 5 die Rohrpoststation nach Fig. 2 in perspektivischer Darstellung mit durch die Leitvorrichtung teilweise verschlossener Eingabeöffnung.

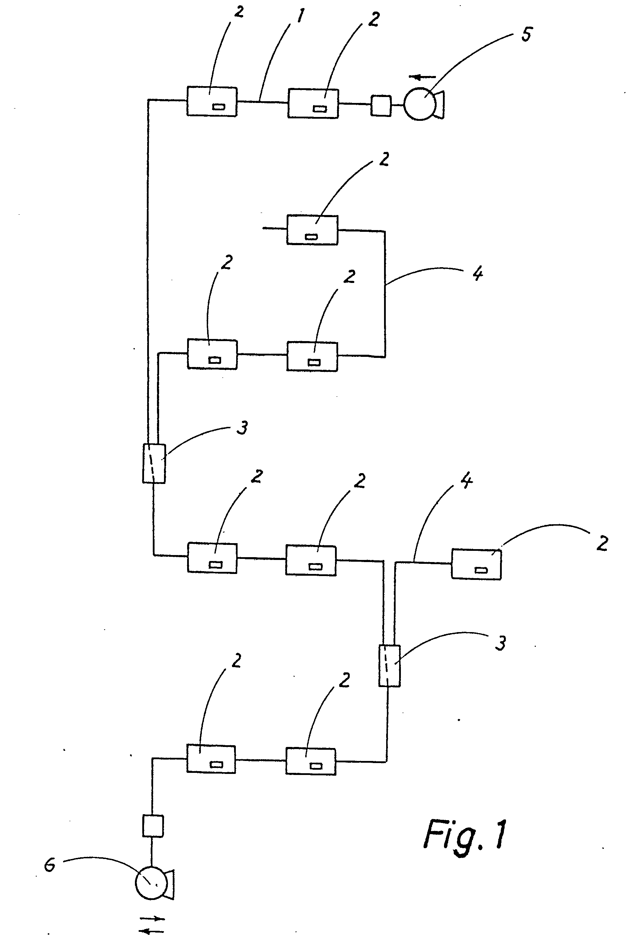

Die in Fig. 1 schematisch dargestellte Rohrpostanlage weist ein durchgehendes Fahrrohr 1 auf, in dem bei 2 angedeutete Rohrpoststationen liegen, die wahlweise für den Durchlauf, die Absendung oder den Empfang von Rohrpostbüchsen betrieben werden können. Entsprechende Rohrpoststationen 2 sind über Weichen 3 und entsprechende als Stichleitungen ausgebildete Fahrrohre 4 an das (Haupt) Fahrrohr 1 angeschlossen, das seinerseits an dem einen Ende mit einem Druckgebläse 5 und an dem anderen Ende mit einem Saugdruckgebläse 6 verbunden ist.

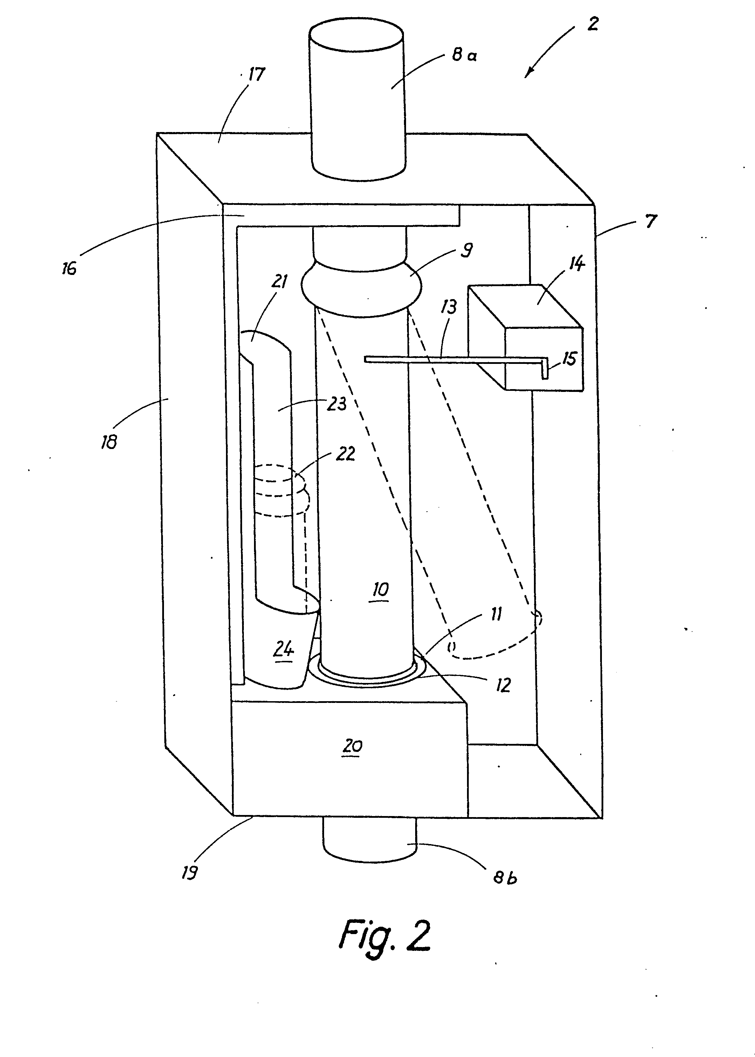

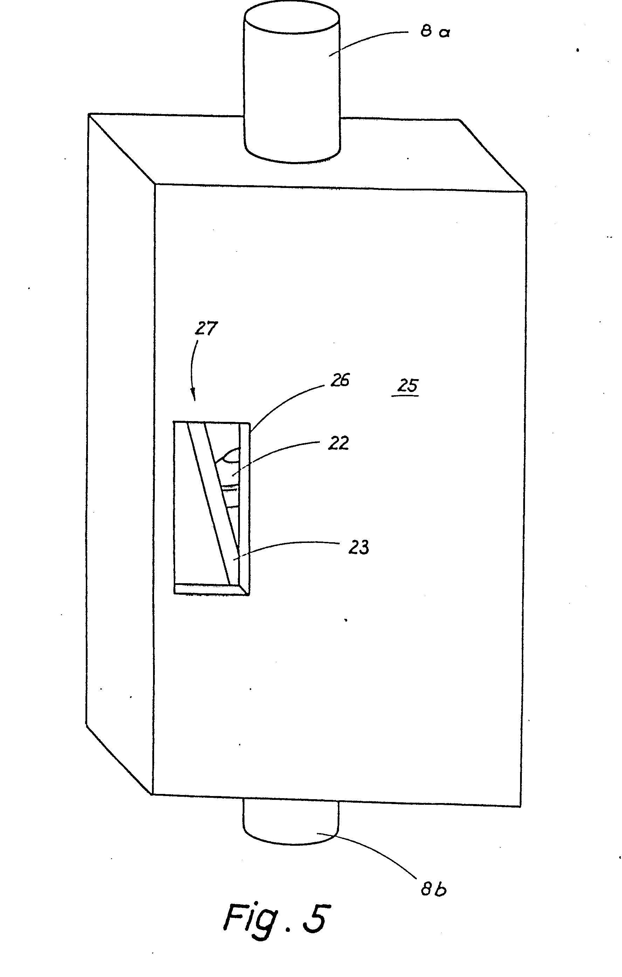

Jede der Rohrpoststationen 2 weist in der aus den Fig. 2, 3, 4 und 5 ersichtlichen Weise ein rechteckiges, kastenartiges Gehäuse 7 auf, in das an gegenüberliegenden Seitenwänden zwei koaxiale Rohrstutzen 8a und 8b münden, an denen jeweils das Fahrrohr 1 bzw. 4 angeschlossen ist. An dem oberen Rohrstutzen 8a ist innerhalb des Gehäuses 7 über einen Faltenbalg oder eine Manschette 9 ein Rohrstück 10 abgedichtet angeschlossen, das normalerweise in der in Fig. 2 mit ausgezogenen Linien dargestellten Ruhestellung steht, in der es im Zuge der beiden Rohrstutzen 8a und 8b und folglich im Zuge des Fahrrohres 1

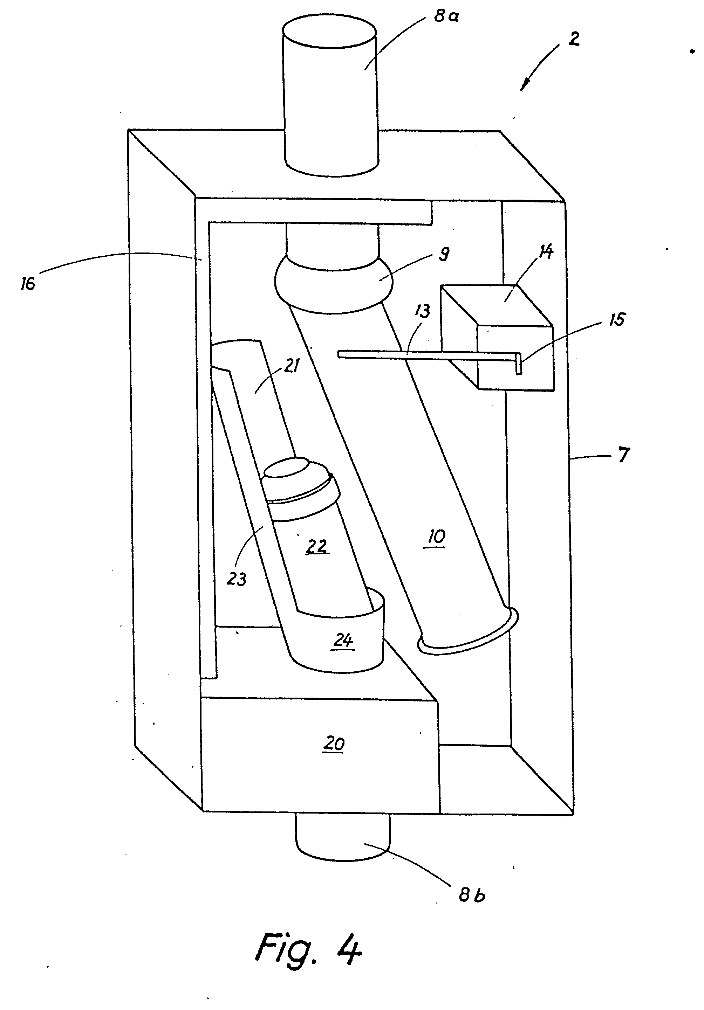

bzw. 4 liegt. Das herausschwenkbare Rohrstück 10 trägt an seinem unteren freien Ende eine Dichtung 11, die mit einer entsprechenden Dichtungseinrichtung 12 an dem zugeordneten, mit dem Rohrstück 10 wahlweise in Eingriff bringbaren freien Ende des Rohrstutzens 8b zusammenwirkt, um eine weitgehend luftdichte Verbindung zwischen dem Rohrstutzen 8b und dem in der Ruhestellung stehenden Rohrstück 10 zu erzielen. Mit dem Rohrstück 10 ist über einen Betätigungsarm 13 eine Stellvorrichtung 14 gekuppelt, die beispielsweise einen Elektromotor enthält, der über eine Kurbel 15 den Betätigungsarm 13 bewegen und damit das Rohrstück 10 aus der Ruhestellung in die in Fig. 4 veranschaulichte herausgeschwenkte Stellung überführen kann.

An den oberen Rohrstutzen 8a ist oberhalb der im Bereich des Faltenbalges 9 liegenden gelenkigen Verbindungsstelle des Rohrstückes 10 mit dem Rohrstutzen 8a eine Bypassleitung 16 angeschlossen, die den benachbarten Wänden 17, 18, 19 des Gehäuses 7 folgend, in den Rohrstutzen 8b unterhalb dessen Verbindungsstelle mit dem Rohrstück 10 in nicht weiter veranschaulichter Weise innerhalb eines über dem Rohrstutzen 8b sitzenden Kastens 20 in den Rohrstutzen 8b einmündet. Die Bypassleitung 16 ist in Gestalt einer in dem Kasten angeordneten, etwa U-förmigen Kammer ausgebildet, die auf ihrer Innenseite zur Geräuschdämpfung eine Wandbeschichtung, beispielsweise aus Schaumstoff, tragen kann. In ihrem unteren Bereich weist die Bypassleitung 16 ein in den Figuren nicht sichtbares Verschlußstück in Form eines Schiebers auf, der so bemessen ist, daß er in der einen Stellung die Bypassleitung 16 an der Einmündung in den Kasten 20 und in der anderen Stellung den Rohrstutzen 8b vollständig luftdicht abschließt.

In dem Gehäuse 7 ist in dem Bereich des absteigenden Teiles der Bypassleitung 16 eine Leitvorrichtung 21 zur Speicherung einer in Fig. 2 gestrichelt eingezeichneten Rohrpostbüchse 22 angelenkt, wobei die Leitvorrichtung 21 von einer im Querschnitt im wesentlichen halbkreisförmigen Rinne 23 gebildet ist, die an ihrem unteren Ende in einen trichterförmigen Abschnitt 24 übergeht. Mittels eines nicht veranschaulichten Antriebes kann die Leitvorrichtung 21 aus der in Fig. 2 gezeigten Ruhestellung, in der sie etwa senkrecht verläuft, in die in Fig. 4 gezeigte Stellung überführt werden, in der sich der trichterförmige Abschnitt 24 über dem freien Ende des Rohrstutzens 8b befindet, wozu gleichzeitig das Rohrstück 10 durch den Antrieb 14 seitlich herausgeschwenkt ist.

Im Bereich der Rinne 23 der Leitvorrichtung 21 ist in der Vorderwand 25 des Gehäuses 7 eine Eingabeöffnung 26 vorgesehen, durch die hindurch eine Rohrpostbüchse 22 in den trichterförmigen Abschnitt 24 einsetzbar ist. Die offene Seite der Rinne 23 ist hierzu der Eingabeöffnung 26 gerade so weit zugekehrt, daß die Einführbewegung der Rohrpostbüchse 22 nicht behindert wird, andererseits aber ein Herunterrollen der Rohrpostbüchse 22 bei in die in Fig. 4 veranschaulichte Stellung überführter Leitvorrichtung 21 wirksam verhindert ist.

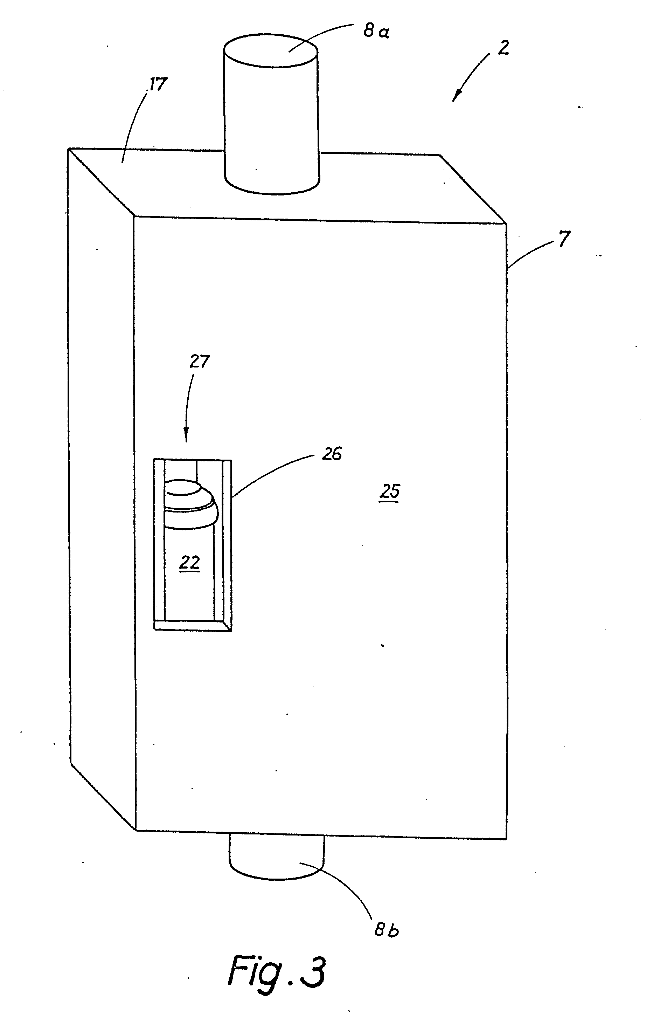

Die Eingabeöffnung 26 bildet zusammen mit der Leitvorrichtung 21 eine Sperreinrichtung 27, durch die die Eingabeöffnung 26 gegen die Eingabe von Rohrpostbüchsen 22 gesperrt ist, wenn sich entweder in der Leitvorrichtung 21 bereits eine Rohrpostbüchse 22 befindet oder wenn die Leitvorrichtung 21 aus der Ruhelage herausgeschwenkt ist und sich ihr trichterförmiger Abschnitt 24 über dem freien Ende des Rohrstutzens 8b befindet. Hierzu weist die Eingabeöffnung 26 solche Abmessungen und eine solche Lage innerhalb der Vorderwand 25 auf,

- 8 -

daß bei in Ruhestellung befindlicher Leitvorrichtung 21 gerade eine Rohrpostbüchse 21 einführbar ist, die dann, wie in Fig. 3 veranschaulicht, durch die Eingabeöffnung 26 sichtbar ist und diese fast vollständig ausfüllt.

Wenn andererseits die Leitvorrichtung 21 aus ihrer Ruhestellung in die in Fig. 4 veranschaulichte Stellung überführt ist, verläuft die Rinne 23 etwa diagonal über die Eingabeöffnung 26, womit wiederum keine Eingabe von Rohrpostbüchsen 22 möglich ist.

Die insoweit beschriebene Rohrpoststation 2 arbeitet folgendermaßen:

Ein Benutzer, der eine Rohrpostbüchse 22 absenden will, führt, wenn in der Eingabeöffnung 26 keine andere Rohrpostbüchse sichtbar ist und auch die Leitvorrichtung 21 nicht verschwenkt ist, die entsprechende Rohrpostbüchse über die Eingabeöffnung 26 in die Rohrpoststation 2 ein, womit die abzusendende Rohrpostbüchse 22 nunmehr in der Leitvorrichtung 21 gespeichert ist und auf dem Kasten 20 aufsteht. Die Eingabe weiterer Rohrpostbüchsen durch die Eingabeöffnung 26 ist nicht mehr möglich. Sobald in der in Fig. 1 gezeigten Rohrpostanlage keine weitere Rohrpostbüchse 22 mehr unterwegs ist, gibt die Steuerung der Rohrpostanlage an die jeweilige Rohrpoststation 2 einen oder mehrere Steuerbefehle, wodurch in der entsprechenden Rohrpoststation 2 das Rohrstück 10, wie in Fig. 4 gezeigt, seitlich herausgeschwenkt wird. Gleichzeitig wird die die abzusendende Rohrpostbüchse 22 speichernde Leiteinrichtung 21 über das freie Ende des unteren Rohrstutzens 8b geschwenkt, wie dies ebenfalls in Fig. 4 gezeigt ist. Damit verläuft die Leiteinrichtung 21 mit ihrer Rinne 23 etwa diagonal über die Eingabeöffnung 26 und sperrt die Eingabeöffnung gegen das versehentliche Eingeben

weiterer Rohrpostbüchsen 22. Unmittelbar nachdem der trichterförmige Abschnitt 24 vollständig über das freie Ende des Rohrstutzens 8b gelangt ist, gleitet die Rohrpostbüchse 22 durch den Abschnitt 24 in den Rohrstutzen 8b und damit in das Fahrrohr 1 bzw. 4 und wird in der bekannten Weise in der Rohrpostanlage durch die Gebläse 5 und 6 transportiert.

Zu einem beliebigen Zeitpunkt nach dem Einführen der Rohrpostbüchse 22 in das Fahrrohr 1 bzw. 4 wird durch die Steuerung der Rohrpostanlage der jeweiligen Rohrpoststation 2 der Befehl erteilt, die Leitvorrichtung 21 sowie das Rohrstück 10 wieder in die Ruhestellung zurückzuschwenken. Die Rohrpoststation 2 ist damit bereit, eine weitere Rohrpostbüchse 22 aufzunehmen und bis zum Absenden in der Leiteinrichtung 21 zwischenzuspeichern.

Wenn für die Leitvorrichtung 21 und das Rohrstück 10 getrennte Antriebe vorgesehen sind, kann die Rohrpoststation 2 in die Empfangsstellung überführt werden, bei der das Rohrstück 10 aus der in Fig. 2 gezeigten Ruhestellung in die in Fig. 4 veranschaulichte Empfangs- oder Absendestellung überführt ist, während hiervon unabhängig die Leiteinrichtung 21 in ihrer Ruhestellung verbleibt. Eine ankommende Rohrpostbüchse 22 fällt dann aus dem seitlich herausgeschwenkten Rohrstück 10 in eine entsprechende Auffangstelle.

Haben hingegen das Rohrstück 10 und die Leitvorrichtung 21 nur einen gemeinsamen Antrieb, mit dem sie gleichzeitig verschwenkt werden, so ist es zweckmäßig, wenn in der Rohrpoststation 2 Vorkehrungen getroffen sind, die verhindern, daß bei auf Empfang geschaltetem Rohrstück 10 eine in der Leitvorrichtung 21 gespeicherte und über das freie Ende des Rohrstutzens 8b gebrachte Rohrpostbüchse 22 aus dem trichterförmigen Abschnitt 24 in das Fahrrohr 1 bzw. 4 hineinfällt.
Diese Vorkehrung kann entweder in dem nicht veranschaulichten Schieber zum Absperren des Rohrstutzens 8b oder in einem besonderen, an der Leitvorrichtung 21 angebrachten Halteglied bestehen, das wahlweise durch einen entsprechenden Antrieb betätigt, die Rohrpostbüchse 22 frei gibt und in der nicht betätigten Stellung festhält. In beiden Fällen können dann nach erfolgtem Empfang einer Rohrpostbüchse das Rohrstück 10 und die Leitvorrichtung 21 wieder in die Ruhelage zurückgeschwenkt werden, ohne daß die in der Leitvorrichtung 21 zwischengespeicherte Rohrpostbüchse 22 abgesandt worden ist.

Falls es die räumlichen Gegebenheiten in der Rohrpoststation verhindern, die Leitvorrichtung 21 zum Sperren der Eingabeöffnung 26 zu verwenden, kann in dem Gehäuse 7 ein zusätzliches Sperrglied angelenkt sein, das mit der Bewegung der Leitvorrichtung 21 zwangsgekuppelt ist und die Eingabeöffnung 26 bei aus der Ruhelage verschwenkter Leitvorrichtung 21 wenigstens teilweise versperrt.

Die in der Vorderwand 25 angebrachte Eingabeöffnung 26 bietet darüber hinaus den Vorteil, daß die Rohrpoststation 2 etwa in Augenhöhe angebracht werden kann und so der Belegungszustand der Rohrpoststation 2 auch von Benutzern mit stark unterschiedlicher Körpergröße leicht beobachtbar ist.

- 11 -

Patentansprüche

1. Für Durchlauf, Empfang und Absendung von Rohrpostbüchsen eingerichtete speicherfähige Rohrpoststation mit einem eine Vorderwand, eine Sperreinrichtung für Rohrpostbüchsen und eine Eingabeöffnung für Rohrpostbüchsen aufweisenden Gehäuse, einem aus dem Zuge eines durchgehenden Fahrrohres herausschwenkbaren und in dem Gehäuse befindlichen Rohrstück, das an einem Ende beweglich an das Fahrrohr angeschlossen und in seiner Ruhestellung beidends abgedichtet mit dem Fahrrohr verbunden ist und durch das in der ausgeschwenkten Stellung eine ankommende Rohrpostbüchse zu einer Auffangstelle leichtbar ist, sowie mit einem in dem Bereich des anderen, mit dem Rohrstück wahlweise in Verbindung bringbaren freien Endes des Fahrrohres angeordneten Verschlußstück, durch das das Fahrrohr wahlweise verschließbar ist und mit einer in dem Gehäuse angelenkten und der Einleitung einer abzusendenden Rohrpostbüchse dienenden Leitvorrichtung, die bei herausgeschwenktem Rohrstück zum Einführen der Rohrpostbüchse in das Fahrrohr aus ihrer Ruhestellung über die Öffnung des freien Endes des Fahrrohres bringbar ist, dadurch gekennzeichnet, daß der Eingabeöffnung (26) die Sperreinrichtung (27) für Rohrpostbüchsen (22) zugeordnet ist, durch die sowohl bei einer in der Leitvorrichtung (21) eingelegten und dort gespeicherten Rohrpostbüchse (22) als auch bei aus der Ruhestellung verschwenkten Leitvorrichtung (21) die Eingabe von Rohrpostbüchsen (22) in die Eingabeöffnung (26) gesperrt ist.

2. Rohrpoststation nach Anspruch 1, dadurch gekennzeichnet, daß die Sperreinrichtung (27) ein mit der Bewegung der Leitvorrichtung (21) zwangsweise gekuppeltes und innerhalb des Gehäuses (7) vor der Eingabeöffnung (26) verschwenkbares Sperrglied umfaßt, durch das die Eingabeöffnung (26) bei aus der Ruhelage verschwenkten Leitvorrichtung (21) wenigstens teilweise verschlossen ist.

3. Rohrpoststation nach Anspruch 1, dadurch gekennzeichnet, daß die Eingabeöffnung (26) in der Vorderwand (25) des Gehäuses (7) im Bereich der in der Ruhestellung befindlichen Leitvorrichtung (21) angeordnet ist und die Sperreinrichtung (27) die Leitvorrichtung (21) beinhaltet, durch die im aus der Ruhelage herausgeschwenktem Zustand die Eingabeöffnung (26) wenigstens teilweise verschlossen ist.

4. Rohrpoststation nach Anspruch 1, dadurch gekennzeichnet, daß die Sperreinrichtung (27) die Eingabeöffnung (26) enthält, die solche Abmessungen und eine solche Lage innerhalb der Vorderwand (25) aufweist, daß sie durch eine einzige, in der in der Ruhestellung befindlichen Leitvorrichtung (21) enthaltenen Rohrpostbüchse (22) für die Eingabe einer weiteren Rohrpostbüchse (22) gesperrt ist.

5. Rohrpoststation nach Anspruch 1, dadurch gekennzeichnet, daß die Leitvorrichtung (21) ein wahlweise betätigbares Halteglied für eine einsetzbare Rohrpostbüchse (22) aufweist.

6. Rohrpoststation nach Anspruch 1, dadurch gekennzeichnet, daß die Leitvorrichtung (21) mit eingelegter
Rohrpostbüchse (22) bei durch das Verschlußstück
geschlossenem Fahrrohr (1, 4) aus der Ruhelage
heraus über das Fahrrohr (1, 4) und zurück verschwenkbar ist.

0086940

Fig.1

*Fig. 2*

*Fig.3*

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 946 292 (AEROPOST CARL A. SCHMITT GMBH U. CO. KG) * Seite 10, Zeilen 1-26 ; Figur 1 * | 1 | B 65 G 51/32 |
| A | DE-B-1 781 335 (STANDARD ELEKTRIK LORENZ AG) * Anspruch 1 ; Figuren 1, 2 * | 1,3 | |
| A | DE-A-2 033 310 (STE FRANCAISE DES TUBES PNEUMATIQUES) * Seite 4, Zeilen 3-7 ; Seite 8, Zeilen 15-19 ; Figuren 1-4 * | 1-4 | |
| A | DE-A-2 552 894 (FA. SAUNIER DUVAL) * Seite 7, Zeile 30 - Seite 8, Zeile 6 * | 1 | |

RECHERCHIERTE SACHGEBIETE (Int. Cl. ³)

B 65 G 51/00

Der vorliegende Recherchenbericht wurde für alle Patentansprüche erstellt.

| Recherchenort BERLIN | Abschlußdatum der Recherche 28-04-1983 | Prüfer SIMON J J P |
|---|---|---|